# EUROPÄISCHE PATENTANMELDUNG

(11) **EP 0 684 122 A2**
(43) Veröffentlichungstag der Anmeldung: **29.11.1995**
(21) Anmeldenummer: 95107757.7
(22) Anmeldetag: 20.05.1995
(51) Int. Cl.: B29C 51/00, B29C 69/00

(54) **Maschine zum Herstellen von tiefgezogenen Bechern mit Fuss**

(30) Priorität: 24.05.1994 DE 4418063
(71) Anmelder: Hassia Verpackungsmaschinen GmbH, D-63691 Ranstadt (DE)
(72) Erfinder: Walter, Kurt, Dipl. Ing., D-63695 Glauburg (DE)
(74) Vertreter: Wolf, Günter, Dipl.Ing.

(57) **Zusammenfassung**

Um Verpackungsbecher mit Füßen herzustellen und um dafür eine FFS-Maschine bekannter Art verwenden, diese aber auch ohne Umstellung normal für Becher ohne Füße betreiben zu können, wird eine Maschine derart vorgeschlagen, daß mindestens um eine Rapportlänge (L) hinter der Tiefziehstation (TS) und neben der Becherfolienförderstrekke (BFF) eine Fußvorrats- oder Fußbildungsstation (FS) mit einem mit Einzelfußtransportelementen (1) versehener Quertransport (2) angeordnet ist, wobei die Einzelfußtransportelemente (1) anzahl- und formationsentsprechend zu den Bechertiefziehelementen der Tiefziehstation (TS) angeordnet sind. Der Quertransport (2) untergreift die der Tiefziehstation (TS) folgende Becherförderstrecke (BF) unterhalb der Becherbodenebene und die Einzelfußtransportelemente (1) sind gegen die Becherbodenebene und gegen in die Becher einfahrbare Gegenhalter verstellbar am Quertransport (2) angeordnet.

## Beschreibung

Die Erfindung betrifft eine Maschine zum Herstellen von tiefgezogenen Bechern mit Fuß, bestehend aus einer Becherfolienförderstrecke mit Folienvorwärm-, Tiefzieh- und Folgestationen.

Becher mit Fuß aus Kunststoff zur Verpackung von Nahrungsmitteln, bspw. Marmelade, Cremes, Joghurt o. dgl. sind bekannt, und zwar sowohl in Form von Spritzgußbechern als auch Tiefziehbechern. Die Spritzgußherstellung verlangt teilbare, also aufwendige Formwerkzeuge, da sich durch die Ausbildung eines Fußes am Becher eine starke Ringsumhinterschneidung ergibt und ein solcher Becher nur durch radiales Öffnen der Formwerkzeuge entformt werden können. Um die Herstellung derartiger Becher dem günstigeren Tiefziehen aus einem Folienband zugänglich zu machen, hat man, soweit bekannt, an den Formwerkzeugen von FFS-Maschinen (Formen, Füllen, Siegeln) angesetzt, siehe bspw. GB-A-2079668, und Tiefziehformwerkzeuge entwickelt, mit denen es möglich ist, derartige Becher mit Fuß in einem Stück aus einem Folienband zu formen. Die dafür erforderlichen Formwerkzeuge sind jedoch im Vergleich zu Spritzgußwerkzeugen nicht minder aufwendig, sondern eher noch aufwendiger, wobei nachteilig hinzukommt, daß die damit hergestellten Becher am Boden einen in das Becherinnere offenen Ringspalt aufweisen, der dadurch zustandekommt, daß man die tiefgezogene Folienzugabe für die Ausbildung des Fußes und des Bodens nach innen einstülpen muß, wodurch ein doppelwandiger Fuß entsteht. Ein weiterer Nachteil ist dadurch gegeben, daß derartig ausgestattete FFS-Maschinen nur für die Herstellung derartiger Becher genutzt werden können, d.h., wollte man mit solchen Maschinen einfache Becher herstellen, also solche ohne Fuß, so müßte die ganze Tiefziehstation ausgebaut und mit anderen herkömmlichen Tiefziehwerkzeugen umgerüstet werden.

Der Erfindung liegt die Aufgabe zugrunde, eine herkömmliche FFS-Maschine derart auszubilden bzw. umzugestalten, daß mit dieser, ohne umrüsten zu müssen, sowohl normale, fußlose Becher als auch Becher mit Fuß und spaltfreiem Boden hergestellt werden können.

Diese Aufgabe ist mit einer Maschine der eingangs genannten Art nach der Erfindung durch die im Kennzeichen des Patentanspruches 1 angeführten Merkmale gelöst.

Unter "formationsentsprechend" ist dabei zu verstehen, daß die Art der Formation der Becher mit der der Füße in der Fußbildungsstation übereinstimmt, der dortige Raster aber kleiner ist als der Raster der Becheranordnung in der Becherfolie.

Bei dieser erfindungsgemäß ausgebildeten Maschine handelt es sich also um eine ganz normale FFS-Maschine, die jedoch hinter der Tiefziehstation eine Fußvorrats- oder Fußbildungsstation aufweist und die ggfls. lediglich etwas länger ist, was aber für die Herstellung ggfls.fußloser Becher keine Rolle spielt. Der Tiefziehvorgang für die Becher bleibt in beiden Fällen der gleiche, da die Füße quer von außen an die tiefgezogenen Becher von unten herangeführt und mit den Bechern verbunden werden, was bspw. mit einem geeigneten Klebemittel (bspw. Hotmeld) erfolgt. Diese Fußapplikation erfolgt an den Becherböden, wenn die tiefgezogenen Becher als Gruppe mit dem vorgegebenen Raster mit dem Becherfolienband noch eine Einheit bilden, da sich ja daran noch der Füllvorgang und das Schließen mit einer von oben zulaufenden Deckfolie anschließen, wonach die fertigen, gefüllten und verschlossenen Becher ausgestanzt werden. Was die alternative "Fußvorrats- oder Fußbildungsstation" betrifft, so können zum einen die Füße in geeigneter Weise vorgefertigt, magaziniert und dann mittels eines geeigneten Querförderers unter die tiefgezogenen Becher gebracht und mit den Böden verbunden werden. Da dies mit relativ aufwendigen Übergabe- und Wendemechaniken verbunden ist, wird die Verwendung einer Fußbildungsstation bevorzugt, d.h., Herstellen der Füße ebenfalls durch Tiefziehen, was im Takt mit der damit ausgerüsteten FFS-Maschine erfolgt. Mit Rücksicht auf den in der Regel und in bezug auf den Becherdurchmesser kleineren Durchmesser des Fußes und um den Verschnitt der Fußfolie so klein wie möglich zu halten, wird vorteilhaft die Maschine bzw. die Fußbildungsstation derart ausgestaltet, daß diese in Form einer kombinierten Überkopf-Fußtiefzieh- und Stanzstation mit zur Becherfolienförderstrecke paralleler Fußfolienförderstrecke und mit Fußtiefzieh- und Stanzelementen ausgebildet ist, die in bezug auf den Becherraster rasterreduziert, aber auf den Becherraster einstellbar am Quertransport angeordnet sind. Das Tiefziehen der Füße erfolgt also zwar mit Werkzeugen, die in ihrer Anzahl und ihrer Formation denen der Bechertiefziehstation entsprechen, wobei aber die Abstände der Fußzentren zueinander entsprechend kleiner sind.

Da die Füße bereits in ihrer Applikationsstellung erzeugt werden, bedarf es keinerlei schwenkbar und raumbeanspruchenden Übergabemechaniken wie bei vorgefertigten und magazinierten Füßen, sondern es sind nur im wesentlichen lineare Quer- und Hubbewegungen auszuführen, was noch näher erläutert wird.

Abgesehen vom vorerwähnten maschinellen Vorteil der Benutzbarkeit herkömmlicher FFS-Maschinen, die also auch ohne weiteres nachgerüstet werden können und die im nachgerüsteten oder im von vornherein erfindungsgemäß ausgerüsteten Zustand ohne Eingriff sowohl zur Herstellung fußloser Becher als auch solcher mit Fuß betrieben werden können, hat das Ganze auch noch den Vorteil, daß man an die Becher in Form, Farbe und Kunststoffmaterial unterschiedliche Füße herstellen und an die Becher applizieren kann.

Die erfindungsgemäße Maschine, weitere Ausgestaltungen und Vorteile werden nachfolgend anhand der zeichnerischen Darstellung von Ausführungsbeispielen näher erläutert.

Es zeigt schematisch
Fig. 1 A,B in Seitenansicht eine typische Becherform mit anzusetzendem (A) und mit angesetztem Fuß (B);
Fig. 2 eine Draufsicht auf den hier interessierenden Bereich einer FFS-Maschine mit erfindungsgemäßer Ausbildung;
Fig. 3 eine Teilansicht in Pfeilrichtung X gemäß Fig. 2;
Fig. 4 eine Ansicht in Pfeilrichtung Y gemäß Fig. 1 und
Fig. 5,6 vergrößert und teilweise im Schnitt die Elemente zur Ausformung, Ausstanzung und für den Transport eines Becherfußes.

Die Maschine besteht wie bisher aus einer Becherfolienfördestrecke BFF mit Folienvorwärm-, Tiefzieh- TS und Folgestationen. Nicht dargestellt sind die Folienvorwärm- und Folgestationen (Füllen, Abdecken, Ausstanzen), da allgemein bekannt. Ebenfalls nicht dargestellt ist die mögliche Ausführungsform, bei der vorgefertigte und magazinierte Füße verarbeitet werden, da hierfür in der Verpakkungsmaschinentechnik bekannte Abnahme- und Übergabeelemente und zugehörige Mechaniken zur Verfügung stehen, die die Abnahme aus dem Magazin, die Übergabe und den Quertransport übernehmen. Wesentlich sind aber auch hierbei die vorerwähnten Maßgaben, daß nämlich mindestens um eine Rapportlänge L hinter der Tiefziehstation TS und neben der Becherfolienförderstrecke BFF eine Fußvorratsstation FS mit einem mit Einzelfußtransportelementen versehener Quertransport angeordnet ist, wobei die Einzelfußtransportelemente anzahl- und formationsentsprechend zu den Bechertiefziehelementen der Tiefziehstation TS angeordnet sind, und daß der Quertransport die der Tiefziehstation TS folgende Becherförderstrecke BF unterhalb der Becherbodenebene E untergreift und daß die Einzelfußtransportelemente gegen die Becherbodenebene E und gegen in die Becher B einfahrbare Gegenhalter G verstellbar am Quertransport angeordnet sind.

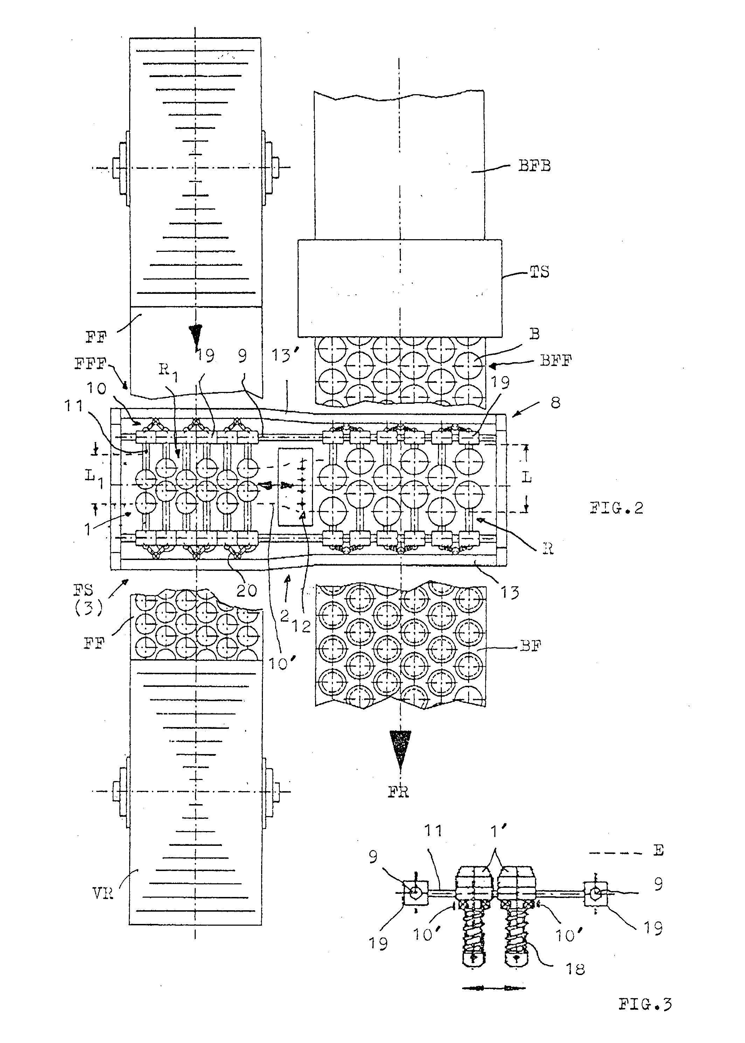

Dargestellt ist demgegenüber die bevorzugte Ausführungsform in Fig. 2, mit der die Füße F ebenfalls im Tiefziehverfahren hergestellt werden. Unter Zugrundelegung der gleichen Merkmale sind hierbei die Einzelfußtransportelemente mit 1 und der Quertransport mit 2 bezeichnet und mit ihrer speziellen konstruktiven Gestaltung verdeutlicht. Dargestellt ist ferner die bevorzugte Ausführungsform, bei der mit Rücksicht auf möglichst geringen Verschnittanfall an den Fußfolien FF die Fußbildungsstation FS in Form einer kombinierten Überkopf-Fußtiefzieh- und Stanzstation 3 mit zur Becherfolienförderstrecke BFF paralleler Fußfolienförderstrecke FFF und mit Fußtiefzieh- und Stanzelementen S ausgebildet ist, die in bezug auf den Becherraster R rasterreduziert, aber auf den Becherraster einstellbar am Quertransport 2 angeordnet sind. Für diese Rasteranpassung ist der Quertransport 2 der Maschine aus einem Gestell 8 mit zwei parallelen Führungsstangen 9 gebildet, auf denen hülsengeführte, paarweise mit Spreizelementen 10 gekoppelte Querstangen 11 und an diesen die das Unterteil U der Fußtiefzieh- und Stanzstation 3 bildenden Einzelfußtransportelemente 1 angeordent sind, wobei im Stellweg zwischen der Fußtiefzieh-und Stanzstation 3 und der Becherförderstrecke BF Querspreizführungen 10' angeordnet sind.

Für die Spreizung in Richtung der Führungsstangen 9, also quer zur Förderrichtung FR weisen auf Höhe der Spreizelemente 10 erstreckte, als Führungskurven ausgebildete Querholme 13 des Gestelles 8 unter der Becherförderstrecke BF zueinander eine geringere Distanz D als unter der Fußtiefzieh- und Stanzstation 3 auf, und beide Bereiche der Querholme 13 gehen stetig im Übergangsbereich 13' als Kurven ineinander über.

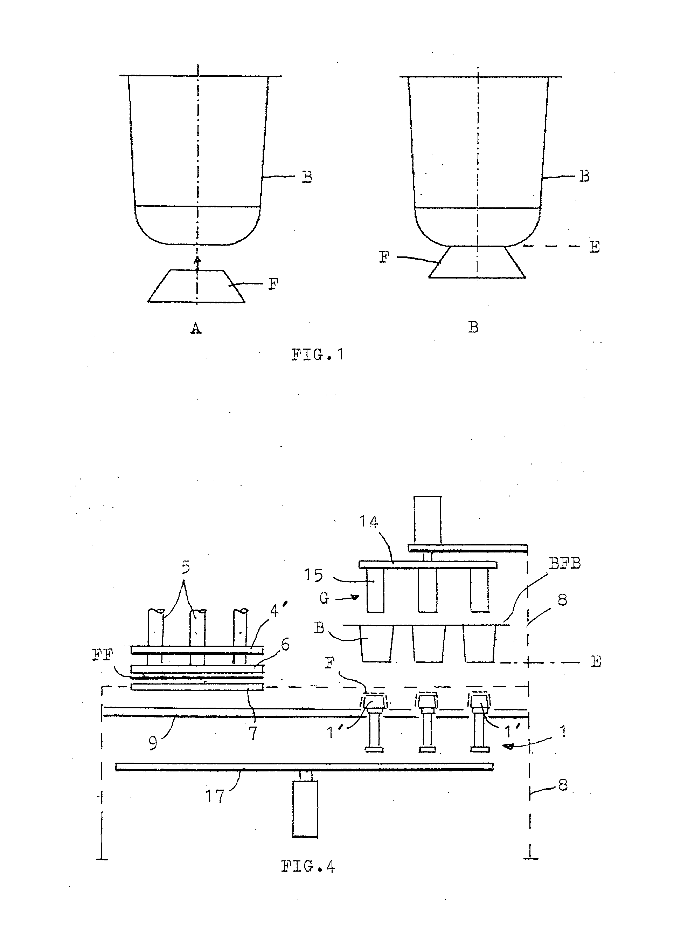

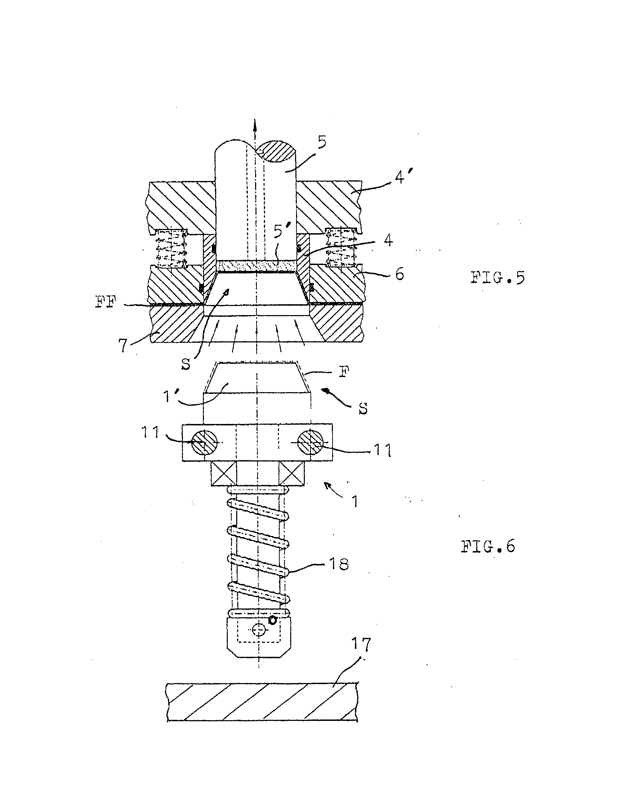

Bezüglich der Fußtiefzieh- und Stanzelemente S wird auf Fig. 5, 6 verwiesen, wonach diese Elemente jeweils aus einem ringförmigen Form- und Schneidstempel 4, einem diesen zentrisch durchgreifenden Saug/Druck- und Übergabestempel 5 und Foliennieder- und Gegenhalter 6, 7 bestehen, die das stationäre Oberteil O bilden, und aus dem gegen das Oberteil O verstellbaren, als Formstempel ausgebildeten Einzeltransportelement 1. Für die Spreizung in Förderrichtung FR dienen die vorerwähnten Querspreizführungen 10' (gestrichelt in Fig. 1 angedeutet).

Wenn Becher B mit Fuß F gemäß Fig. 1 B hergestellt werden sollen, arbeitet die Maschine wie folgt, wobei als selbstverständlich vorauszusetzen ist, daß die die Maschine bildenden beiden Komponenten taktmäßig abgestimmt sind.

Zum Tiefziehen der Becher B in der Tiefziehstation TS bedarf es keiner Erläuterung, da dies in herkömmlicher Weise geschieht, und zwar in Form einer Bechergruppe mit der bspw. dargestellten Anordnung im Raster R, der größer ist als der Raster R₁ der Fußbildungsstation FS, durch die im Takt die Fußfolie FF transportiert wird, die auf die Verschnittsammelrolle VR aufläuft. Beim Ausform-und Stanzvorgang ist die Fußfolie FF (siehe Fig. 5) zwischen dem stationären Gegenhalter 7 und dem Folienniederhalter 6 eingespannt.

Der vom ringförmigen Form- und Schneidstempel 4 umgebene und geführte Saug/Druck- und Übergabestempel 5 ist mit einer Saugplatte 5' versehen, mit der und dem Form- und Schneidstempel 4 die gewünschte Form des Fußes F vorgegeben ist. Gleichzeitig mit dem Ansaugen wird das Einzelfußtransportelement 1, das ein formentsprechendes Kopfstück 1' aufweist, von einer Hubleiste 17, die alle vorhandenen zwölf Elemente 1 erfaßt, betätigt, nach oben gegen die angesaugte Fußfolie FF gefahren. Nach Beendigung dieses Tiefziehvorganges wird der Form- und Schneidstempel 4 von einer Platte 4' etwas nach unten gedrückt, wodurch der ausgeformte Fuß F ausgestanzt und vom auf Druck umgeschalteten Übergabestempel 5, der den durch Wirkung einer Feder 18 wieder nach unten gehenden Kopfstück 1' nacheilt, auf diesem abgelegt wird. Dies geschieht gleichzeitig mit allen für eine Gruppe hergestellten Füßen F. Die auf Stangen 11 (siehe Fig. 1, 6) gelagerte Einzelfußtransportelemente 1 mit den aufsitzenden Füßen F werden nun insgesamt auf den Führungsstangen 9, auf denen die Stangen 11 mit Hülsen 19 gelagert sind, nach rechts unter die Becherfolienstrecke BFF verschoben. Jeweils zwei Hülsen 19 sind dabei, wie dargestellt, mit Kniegelenkgliedern 20 gekoppelt, die beim Verschieben durch die entsprechend als Kurven geformten Querholme 13 des Gestelles 8 gespreizt werden. Etwa nach dem gleichen Prinzip erfolgt die Spreizung der Elemente 1 in und gegen Förderrichtung, mit den Querspreizführungen 10', so daß nunmehr alle Elemente 1 mit den aufsitzenden Füßen F genau mittig unter den Becherböden zu stehen kommen, d.h., dem großen Becherraster R entsprechen. Diese Spreizung in Förderrichtung kann bspw., da im einzelnen nicht dargestellt, durch zwischen je zwei Elemente 1 angeordnete Federn erfolgen, die diese Elemente 1 gegen die Querspreizführungen 10' drücken, welche bezüglich ihrer Distanzen umgekehrt angeordnet sind wie die Querholme 13. Mittig im Stellweg von links nach rechts ist beim Ausführungsbeispiel eine Auftragseinrichtung 12 vorgesehen, mit der eine Klebemittelschicht auf die Böden der Füße aufgetragen wird. Eine solche Klebemittel-Auftragseinrichtung 12 kann bspw. aber auch unter der Becherförderstrecke BF unmittelbar hinter der Tiefziehstation TS angeordnet werden, die dann für eine Klebemittelbeschichtung der Becherböden sorgt. Wenn die Elemente 1 die dem Becherraster R entsprechende Stellung erreicht haben, wird wiederum die sich auch bis in diesen Bereich erstreckende Hubleiste 17 betätigt, die die Kopfstücke 1' mit den Füßen F gegen die Becherböden drückt. Hierzu wird auf Fig. 4 verwiesen, gemäß der gleichzeitig von oben eine Traverse 14 mit im entsprechenden Raster R angeordneten Stempeln 15 nach unten gedrückt wird, um einen Gegenhalt für die Anpressung der Füße zu bilden. Die Fußfolie FF ist inzwischen um eine Rapportlänge L₁ weitergerückt, und während der Rückstellung der Elemente 1 gemäß Fig. 6 unter das Oberteil gemäß Fig. 5 erfolgt bereits das Ansaugen und Tiefziehen einer neuen Gruppe von Füßen F. Während der vorbeschriebenen Ausformung der Füße F und deren Übergabe an die Elemente 1 ist auch das Becherfolienband BFB um seine Rapportlänge L nachgerückt.

## Patentansprüche

1. Maschine zum Herstellen von tiefgezogenen Bechern (B) mit Fuß (F), bestehend aus einer Becherfolienförderstrecke (BFF) mit Folienvorwärm-, Tiefzieh(TS)- und Folgestationen,
dadurch gekennzeichnet,
daß mindestens um eine Rapportlänge (L) hinter der Tiefziehstation (TS) und neben der Becherfolienförderstrecke (BFF) eine Fußvorrats-oder Fußbildungsstation (FS) mit einem mit Einzelfußtransportelementen (1) versehener Quertransport (2) angeordnet ist, wobei die Einzelfußtransportelemente (1) anzahl- und formationsentsprechend zu den Bechertiefziehelementen der Tiefziehstation (TS) angeordnet sind, und daß der Quertransport (2) die der Tiefziehstation (TS) folgende Becherförderstrecke (BF) unterhalb der Becherbodenebene (E) untergreift und daß die Einzelfußtransportelemente (1) gegen die Becherbodenebene (E) und gegen in die Becher (B) einfahrbare Gegenhalter (G) verstellbar am Quertransport (2) angeordnet sind.

2. Maschine nach Anspruch 1,
dadurch gekennzeichnet,
daß die Fußbildungsstation (FS) in Form einer kombinierten Überkopf-Fußtiefzieh- und Stanzstation (3) mit zur Becherfolienförderstrecke (BFF) paralleler Fußfolienförderstrecke (FFF) und mit Fußtiefzieh- und Stanzelementen (S) ausgebildet ist, die in bezug auf den Becherraster rasterreduziert, aber auf denBecherraster einstellbar am Quertransport (2) angeordnet sind.

3. Maschine nach Anspruch 2,
dadurch gekennzeichnet,
daß die Fußtiefzieh- und Stanzelemente (S) jeweils aus einem Form- und Schneidstempel (4), einem diesen zentrisch durchgreifenden Saug(Druck- und Übergabestempel (5) und Foliennieder- und Gegenhalter (6, 7) bestehenden, stationären Oberteil (O) und aus dem gegen das Oberteil (O) verstellbaren, als Formstempel ausgebildeten Einzeltransportelement (1) gebildet sind.

4. Maschine nach Anspruch 2 oder 3,
dadurch gekennzeichnet,
daß der Quertransport (2) aus einem Gestell (8) mit zwei parallelen Führungsstangen (9) gebildet ist, auf denen hülsengeführte, paarweise mit Spreizelementen (10) gekoppelte Stangen (11) und an diesen die das Unterteil (U) der Fußtiefzieh- und Stanzstation (3) bildenden Einzelfußtransportelement (1) angeordnet sind, wobei im Stellweg zwischen der Fußtiefzieh- und Stanzstation (3) und der Becherförderstrecke (BF) Querspreizführungen angeordnet sind.

5. Maschine nach Anspruch 4,
dadurch gekennzeichnet,
daß auf Höhe der Spreizelemente (10) erstreckte Querholme (13) des Gestelles (8) unter der Becherförderstrecke (BF) zueinander eine geringere Distanz (D) als unter der Fußtiefzieh- und Stanzstation (3) aufweisen und beide Bereiche der Querholme (13) stetig als Kurven im Übergangsbereich (13') ineinander übergehen.

6. Maschine nach einem der Ansprüche 1 bis 5,
dadurch gekennzeichnet,
daß der Gegenhalter (G) aus an einer am Gestell (8) auf und ab bewegbaren Traverse (14) im Becherraster R angeordneten Stempeln (15) gebildet ist.

7. Maschine nach einem der Ansprüche 1 bis 6,
dadurch gekennzeichnet,
daß im Stellweg der Einzelfußtransportelemente (1) zwischen Fußbildungsstation (FS) und Becherförderstrecke (BF) eine Klebemittel-Auftragseinrichtung (12) angeordnet ist.

8. Maschine nach einem der Ansprüche 1 bis 6,
dadurch gekennzeichnet,
daß unter der Becherfolienförderstrecke (BFF) und hinter der Tiefziehstation (TS) eine Klebemittel-Auftragseinrichtung (12) angeordnet ist.
